# EUROPEAN PATENT SPECIFICATION

(11) **EP 0 626 307 B1**
(45) Date of publication and mention of the grant of the patent: **02.12.1998**
(21) Application number: 93830236.1
(22) Date of filing: 28.05.1993
(51) Int. Cl.: B62D 9/02, B62D 61/08, B62K 5/04

(54) **Laterally-leaning three wheeled vehicle**
Seitlich neigbares Dreiradfahrzeug
Véhicule à trois roues latéralement inclinable

(43) Date of publication of application: 30.11.1994
(73) Proprietor: Doveri, Marco, I-56025 Pontedera (Pisa) (IT)
(72) Inventor: Doveri, Marco, I-56025 Pontedera (Pisa) (IT)
(74) Representative: Celestino, Marco

(56) References cited:
- WO-A-85/03678
- CH-A- 657 585
- DE-A- 3 611 417
- GB-A- 775 405

## Description

The present invention relates to a three wheeled vehicle comprising a single wheel mounted on a chassis connected with two substantially parallel wheels by means of an articulated suspension.

Three wheeled vehicles, and some types of four wheeled vehicles, owing to their reduced tread between the wheels, are not sufficiently steady with respect to tilting actions which rise in some ride conditions.

Really, three wheeled vehicles can not laterally lean as two wheelers do, in the latter centrifugal actions being balanced by a corresponding inclination of the vehicle with its dynamic loads.

In three wheeled vehicles and little treaded four wheeled ones, an increase of the lateral steadiness is obtained by means of stabilising devices which allow inclination to the vehicle in order to counteract said tilting actions.

A first type of these stabilising devices comprises resilient means reducing the transversal stiffness thus allowing inclination to the vehicle.

This first kind of devices, which allow driving conditions similar to those possible on two wheelers, has a different resilient reaction versus different loads carried by the vehicle. For this reason the resilient means, such as the one present on a three wheeled vehicle made by Honda, is only sufficient to vertically support the stationary vehicle when the driver is not present. The weight of the latter causes the vehicle to lean if a further stand support is not provided or if the driver himself doesn't hold the vehicle with one of his legs. Since a three wheeled vehicle of this type is guided like a two wheeled one, the effect of aerodynamic actions, which is not negligible, causes the impossibility of equipping the vehicle with a complete body comprising a cab for the driver.

A second type of stabilising devices is mounted on vehicles which already have their own lateral stability and can be guided normally, if the aerodynamic and/or centrifugal lateral actions forces do not reach a particular value. Above this value such devices operate actuators capable of leaning the vehicles so as to balance said aerodynamic and/or centrifugal lateral actions.

These devices can be operated by the driver himself, for example by the depression of pedals, as disclosed in U.S. patent 4484648 or, in alternative, by dynamic or positional sensors automatically controlling the leaning of the vehicle, as disclosed, for example, in international patent application WO/85103678, where a gravity-sensitive device controls tilt actuator means.

This second type of stabilising devices allows to equip the vehicle with a complete body and to carry different loads without varying the capacity of reaction to lateral aerodynamic and centrifugal actions.

A particular three wheels leaning vehicle of the second type is described in DE-A-3611417, comprising a single steerable wheel, mounted on a chassis connected to two substantially parallel wheels by means of an articulated suspension, and a handlebar, mounted on steering means connected to the steerable wheel and to the chassis for rotation about a first axis. This vehicle has an inclining member pivotable about a second axis and actuating means connected to the inclining member and transmitting the rotation of the latter, about the second axis, to the articulated suspension which is subjected to an inclination relative to a median plane with respect to the wheels.

GB-A-775405 describes a four wheeled vehicle having a device effecting tilting. The movement necessary for exercising the control by the driver, is operated by the handlebar, through a movement of rotation about an axis different from the steering axis.

Even if both the vehicles described in DE-A- 3611417 and GB-A-775405 can be tilted by actuating an inclining member connected to a stabilising device, they do not have sufficient lateral stiffness even when the stabilising device is not operating or is wrongly actioned by the driver.

It is therefore an object of the present invention to provide a three wheeled vehicle having a stabilising device of the second type, which is easier to be made with respect to the prior art and able to produce a reaction against lateral actions which can be naturally controlled by the driver with simple movements similar to the movements necessary to drive a motorcycle and which, at the same time, has sufficient lateral stiffness even when said stabilising device is not operating or is wrongly actioned by the driver.

The above objects are reached by the vehicle according to the invention comprising:
- a single steerable wheel mounted on a chassis;
- two substantially parallel wheels connected to the chassis by means of an articulated suspension;
- steering means pivotally connected to the chassis for rotation about a first axis and connected to the steerable wheel;
- a handlebar mounted for rotation with the steering means about the first axis;
- an inclining member mounted for rotation about a second axis;
- actuating means connected to the inclining member and transmitting the rotation of the latter about the second axis to the articulated suspension which is subjected to an inclination relative to a vertical longitudinal median plane.

The articulated suspension comprises substantially longitudinal supporting arms of the parallel wheels mounted for rotation about a third, transverse axis of the chassis and a rocking beam pivotally connected to the chassis about a fourth axis of the chassis, as well as shock absorbing rods pivotally jointed at their ends to the supporting arms and the rocking beam, respectively.

The inclining member consists of the handlebar which is pivotally connected to the steering means about the second axis which extends in a substantially longitudinal direction of the vehicle substantially orthogonally to the first axis, whereas the articulated suspension further comprises:
- a stabilising device pivotally connected to the rocking beam about a fifth axis;
- a connecting bracket integral with the chassis and pivotally joined at its ends with the rocking beam and with the stabilising device respectively; and
- hydraulic means operated by the actuating means and moving the stabilising device according to the position of the handlebar with respect to the second axis.

Advantageously the stabilising device is a double acting cylinder in which slides a piston having a stem pivotally connected to the rocking beam about the fifth axis.

According to a preferred embodiment of the invention the vehicle comprises a front steering wheel and two rear driving wheels.

Further characteristics and advantages of the three wheeled vehicle according to the present invention will be made clearer with the following description of a non limiting, exemplifying embodiment, with reference to the attached drawings.

In the drawings:
- Figure 1 shows a schematic rear elevational view of the vehicle according to the invention in two ride positions;
- Figure 2 shows an elevational side view of the vehicle of figure 1;
- Figures 3 and 4 show a more detailed rear view of the vehicle of figure 1 in a vertical and a leaning position respectively;
- Figure 5 shows a detailed view of the upper portion of an articulated suspension and its actuating means of the vehicle of the above figures.

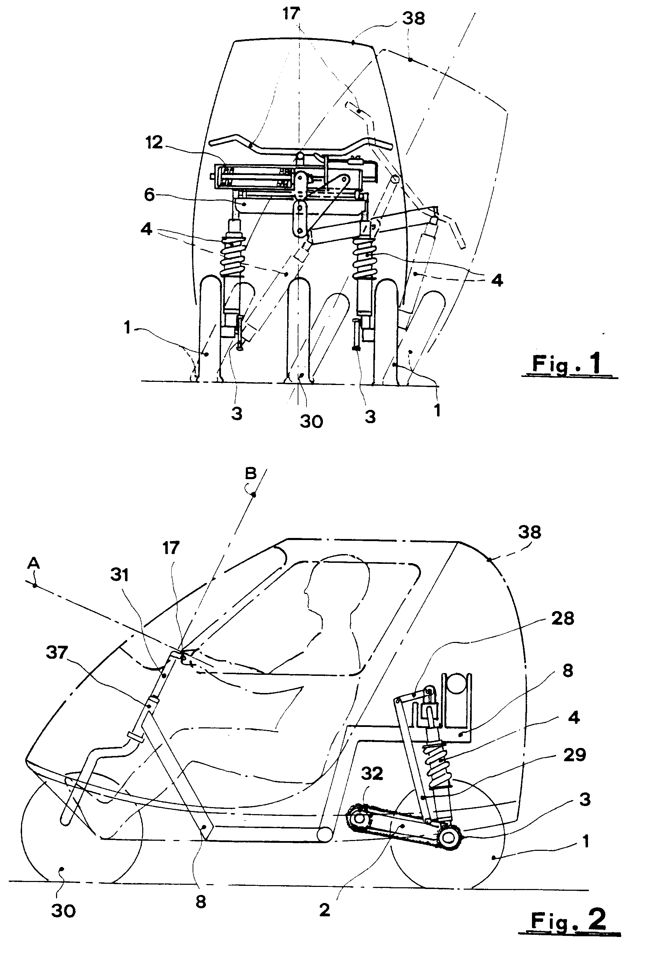

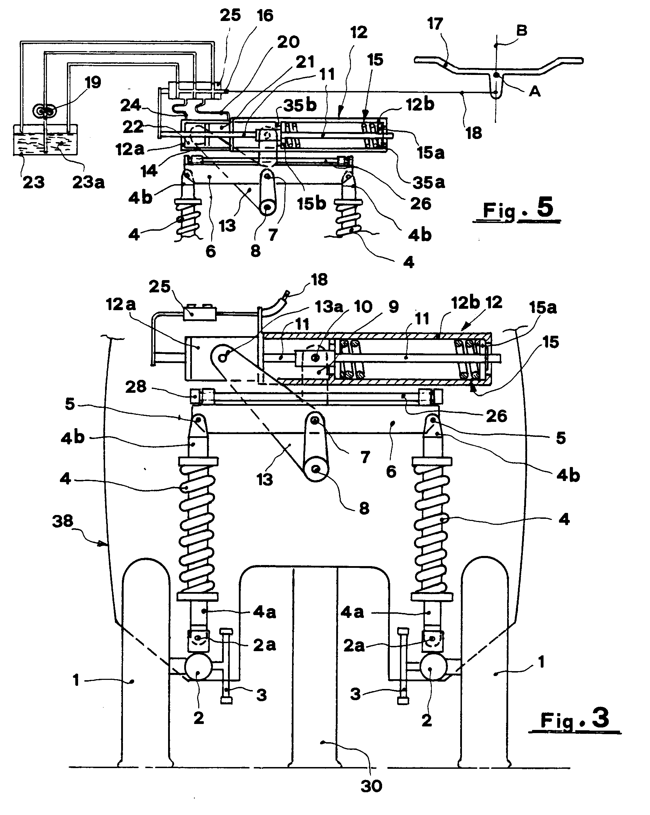

With reference to figures 1 and 2, a three wheeled vehicle according to the invention comprises a single front steerable wheel 30 mounted, in combination with a handlebar 17 on a chassis 8 which is connected with two substantially parallel rear wheels 1 by means of an articulated suspension. The latter comprises two supporting arms 2 of said rear wheels 1 pivotally engaging with driving shafts 32 mounted on the chassis 8 and connected with an engine not shown. Chain gearings 3 transmit the motion of the engine to wheels 1.

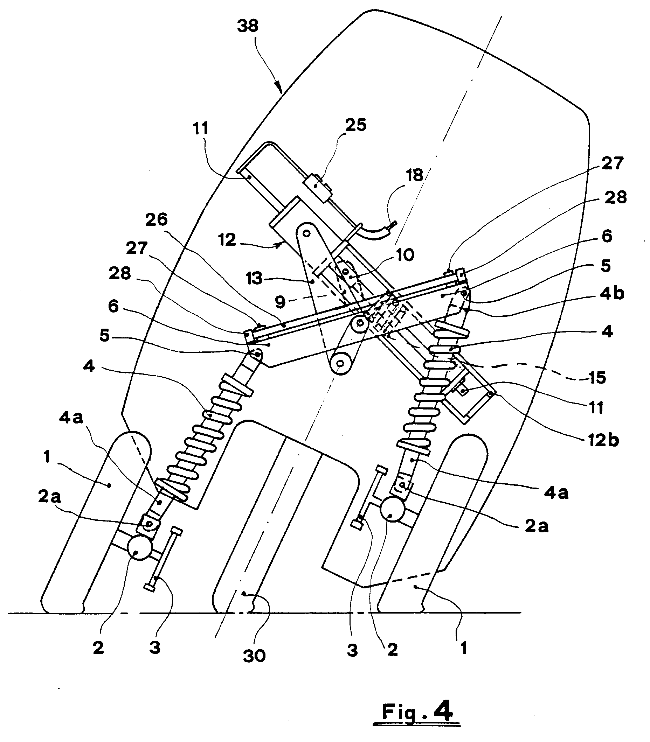

Supporting arms 2, as also shown in figures 3 and 4, are pivotally joined, by means of a spherical hinge 2a, to the lower end 4a of shock absorbing rods 4, whose upper ends 4b are linked, by spherical hinges 5, to the ends of a rocking beam 6. The latter, by means of a central and substantially longitudinal hinge 7, is connected to the chassis 8 to which a connecting bracket 13 is integral which, at one end 13a, is hinged to a double acting cylinder 12. The stem 11 of the latter is longitudinally hinged in 10 to a support 9 integral to rocking beam 6.

The actuating cylinder 12 (figure 5) comprises two coaxial portions 12a and 12b. The first one comprises a double effect piston 14 integral to stem 11. Portion 12b comprises a spring 15 interposed between two end walls 15a and 15b, sliding on stem 11 each in only one direction, towards one another, and resting against two shoulders 35a and 35b provided for on cylinder 12b itself. Spring 15 is advantageously prestressed between wails 15a and 15b in order to produce a resilient load opposite to tilting actions.

The motion of piston 14 is controlled by a slide valve 25 comprising a stem 16 linked to actuating means 18.

The actuating cylinder 12 of the articulated suspension can then be operated by the driver by means of handlebar 17, which, as shown in figures 1, 2 and 5, can rotate about two different and substantially orthogonal axes A and B. The rotation about axis A, which is substantially longitudinal, allows, by actuating means 18 linked to handlebar 17, a control by the driver of the leaning of the vehicle, whereas a rotation of handlebar 17 about axis B, because of the pivotal connection of a steering axle 31 with a joint sleeve 37 integral to chassis 8, allows the rotation of the steerable wheel 30.

Preferably axis A lies in correspondence of the barycentre of the masses of the handlebar 17 and the arms of the driver. In this way the centrifugal loads on these masses do not cause actions disturbing the movements necessary to lean the vehicle because the centrifugal loads moment with respect to axis A is very low.

When handlebar 17 has a clockwise rotation about axis A, stem 16 slides to the left and the pressurised fluid 23a coming from a pump 19 reaches a chamber 21 of cylinder 12a through a flexible duct 20, while, at the same time, the fluid which is present in a chamber 22 can flow through a flexible duct 24 towards a tank 23.

In this way stem 11 slides to the left and, as shown in figure 4, rocking beam 6 leans to the left thus causing wheels 1 and chassis 8 to lean to the right, according to the rotation of handlebar 17 about axis A. The stress of spring 15 acts in opposition to the pressure of the fluid on piston 14 and, for each angle of leaning of the vehicle, a proportional inclination of handlebar 17 corresponds.

With respect to the prior art vehicles, according to the present invention a more instinctive driving is possible because the leaning of the vehicle can be operated by the handlebar itself. In addition, loads caused by centrifugal actions do not hinder the driver from controlling the leaning of the vehicle by the handle bar.

With reference to figures 2 and 3, supporting arms 2 of the articulated suspension are hinged with the lower end of a rod 29 which, at the upper end, pivotally engages with an arm 28 integral with a torsion bar 26, pivotally engaging, by means of hinges 27, with rocking beam 6. Torsion bar 26 causes an increase of the lateral stiffness of chassis 8.

Torsion bar 26, indeed, moves integrally with the rocking beam 6 only when actuating cylinder 12 operates for inclination of the chassis, whereas, when this does not occur, a deformation of torsion bar 26 takes place, due to a different compression of shock absorbing rods 4, thus causing an increase of lateral stiffness of the vehicle in opposition to the leaning of the latter.

More precisely, if the steering is performed properly, the vehicle leans at an angle such that the resultant of the weight and the centrifugal loads acts on the median plane of the vehicle, the two shock absorbing rods 4 being equally compressed and the torsion bar 26 being not subjected to deformation. Inversely, if the steering is improperly performed, because the driver leans the vehicle not much (or too much, said resultant tends to tilt the vehicle towards the outside (or the inside) of the curve, in this case the difference of moment of the resultant of the loads which is riot balanced by the leaning of the vehicle being balanced by a different deformation of the two shock absorbing rods which cause a reaction by torsion bar 26, thus assuring to the vehicle correct ride conditions.

The articulated suspension of the vehicle according to the invention allows to mount on the latter a complete body 38 because an increase of aerodynamical actions on the body itself is balanced by an increase of the steadiness due to the leaning.

## Claims

1. Three wheeled vehicle comprising:
- a single steerable wheel (30) mounted on a chassis (8);
- two substantially parallel wheels (1) connected to the chassis (8) by means of an articulated suspension;
- steering means (31) pivotally connected to the chassis (8) for rotation about a first axis (B) and connected to said steerable wheel (30);
- a handlebar (17) mounted for rotation with said steering means (31) about said first axis (B);
- an inclining member (17) mounted for rotation about a second axis (A);
- actuating, means (18) connected to said inclining member (17) and transmitting the rotation of the latter about said second axis (A) to said articulated suspension which is subjected to an inclination relative to a vertical longitudinal median plane,
wherein said articulated suspension comprises:
- substantially longitudinal supporting arms (2) of said parallel wheels (1), these supporting arms (2) being mounted for rotation about a third, transverse axis of the chassis (8);
- a rocking beam (6) pivotally connected to said chassis (8) about a fourth axis (7) of the chassis;
- shock absorbing rods (4) pivotally jointed at their ends (4a, 4b) to said supporting arms (2) and said rocking beam (6) respectively,
**characterised in that** said inclining member (17) consists of said handlebar (17), which is pivotally connected to said steering means (31) about said second axis (A) which extends in a substantially longitudinal direction of the vehicle substantially orthogonally to said first axis (B),
**and in that** the articulated suspension further comprises:
- a stabilising device (12) pivotally connected to said rocking beam (6) about a fifth, axis (10);
- a connecting bracket (13) integral with said chassis (8) and to an end of which is pivotally joined said rocking beam (6) and to the other end of which is pivotally joined said stabilising device (12); and
- hydraulic means (25) operated by said actuating means (18) and moving said stabilising device (12) according to the position of said handlebar (17) with respect to said second axis (A).

2. Three wheeled vehicle according to claim 1, wherein said stabilising device is a double acting cylinder (12) in which slides a piston (14) having a stem (11) pivotally connected to said rocking beam (6) about said fifth axis (10).

3. Three wheeled vehicle according to claims 1 or 2, wherein said fourth axis (7) of the chassis is an axis longitudinal to said chassis.

4. Three wheeled vehicle according to claims 2 or 3, wherein there are provided resilient means (15) coaxially counteracting with said piston (14) when sliding in said cylinder (12), comprising a spring (15) interposed between two ends walls (15a, 15b) sliding on said stem (11), each in only one direction towards one another, resting against two shoulders (35a, 35b) provided on said cylinder (1 2).

5. Three wheeled vehicle according to claims 2 to 4, wherein said spring (15) is prestressed between said walls (15a,15b).

6. Three wheeled vehicle according to claims 2 to 5, wherein said hydraulic means comprises a slide valve (25) having a stem (16) operated by said actuating means (18), said valve (25) controlling the flow of a pressurised hydraulic fluid through flexible ducts (20,24) communicating with said double acting cylinder (12),

7. Three wheeled vehicle according to claims 3 to 6, wherein said supporting arms (2) are hinged with the lower end of a rod (29) which, at the upper end pivotally engages with an arm (28) orthogonally extending from a torsion bar (26) parallel and pivotally engaging with said rocking beam (6), whereby a different compression of said shock absorbing rods (4) increases the lateral stiffness of said chassis (8).

8. Three wheeled vehicle according to the previous claims wherein said actuating means comprises two cables (18) stretched between said handlebar (17) and said hydraulic means (25,16).

## Patentansprüche

1. Dreiradfahrzeug mit
- einem einzelnen steuerbaren Rad (30), das an einem Chassis (8) angebracht ist;
- zwei im wesentlichen parallelen Rädern (1), die mit dem Chassis (8) mittels einer gelenkigen Aufhängung verbunden sind;
- Lenkungsmitteln (31), die mit dem Chassis (8) zur Drehung um eine erste Achse (B) drehbar sowie mit dem steuerbaren Rad (30) verbunden sind;
- einer gemeinsam mit den Lenkungsmitteln (31) um die erste Achse (B) drehbar angeordneten Lenkstange (17);
- einem Neigungselement (17), das um eine zweite Achse (A) drehbar angeordnet ist;
- Betätigungsmitteln (18), die mit dem Neigungselement (17) verbunden sind und die dessen Drehung um die zweite Achse (A) zu der gelenkigen Aufhängung übertragen, wobei diese relativ zu einer vertikalen, longitudinalen Mittelebene geneigt wird;
wobei die gelenkige Aufhängung folgendes aufweist:
- im wesentlichen longitudinale Haltearme (2) der parallenen Räder (1), wobei die Haltearme (2) um eine dritte, transversale Achse des Chassis (8) drehbar angeordnet sind;
- ein mit dem Chassis (8) um eine vierte Achse (7) des Chassis drehbar verbundenen Schwingträger (6);
- Stoßdämpfer (4), die mit ihren Enden (4a, 4b) drehbar an den Haltearmen (2) bzw. an dem Schwingträger (6) angelenkt sind;
**dadurch gekennzeichnet,**
daß das Neigungselement (17) aus der Lenkstange (17) besteht, die um die Zweite Achse (A) drehbar mit den Lenkungsmitteln (31) verbunden ist, wobei die zweite Achse sich im wesentlichen in longitudinaler Richtung des Fahrzeugs sowie im wesentlichen orthogonal zur ersten Achse (B) erstreckt, und daß die gelenkige Aufhängung weiterhin folgendes aufweist:
- eine Stabilisierungsvorrichtung (12), die mit dem Schwingträger (6) um eine fünfte Achse (10) drehbar verbunden ist;
- einen mit dem Chassis (8) eine Einheit bildenden Verbindungsarm (13), an dessem einem Ende drehbar der Schwingträger (6) und an dessem anderen Ende drehbar die Stabilisierungsvorrichtung (12) angelenkt sind; sowie
- hydraulische Mittel (25), die von den Betätigungsmitteln (18) betätigt werden und die die Stabilisierungsvorrichtung (12) entsprechend der position der Lenkstange (17) hinsichtlich der zweiten Achse (A) bewegen.

2. Dreiradfahrzeug nach Anspruch 1, wobei die Stabilisierungsvorrichtung als doppelt wirkender Zylinder (12) ausgebildet ist, in dem ein Kolben (14) mit einer Stange (11) gleitet, die mit dem Schwingträger (6) um die fünfte Achse (10) drehbar verbunden ist.

3. Dreiradfahrzeug nach Anspruch 1 oder 2, wobei als vierte Achse (7) des Chassis eine bezüglich des Chassis longitudinale Achse vorgesehen ist.

4. Dreiradfahrzeug nach Anspruch 2 oder 3, wobei elastische Mittel (15) vorgesehen sind, die dem Kolben (14) beim Gleiten im Zylinder (12) koaxial entgegenwirken, wobei die elastischen Mittel eine Feder (15) aufweisen, die zwischen zwei auf der Stange (11) gleitenden Begrenzungen (15a, 15b) angeordnet ist, und wobei die Begrenzungen (15a, 15b) jeweils nur in einer Richtung relativ zu der anderen beweglich sind und sich an in dem Zylinder (12) angeordneten Vorsprüngen (35a, 35b) abstützen.

5. Dreiradfahrzeug nach den Ansprüchen 2 bis 4, wobei die Feder (15) zwischen den Begrenzungen (15a, 15b) vorgespannt ist.

6. Dreiradfahrzeug nach den Ansprüchen 2 bis 5, wobei die hydraulischen Mittel ein Gleitventil (25) mit einer Stange (16) aufweisen, die von den Betätigungselementen (18) betätigt wird, wobei das Ventil (25) den Fluß einer unter Druck stehenden Hydraulikflüssigkeit durch flexible Leitungen (20, 24) steuert, die mit dem doppelt wirkenden Zylinder (12) gekoppelt sind.

7. Dreiradfahrzeug nach den Ansprüchen 3 bis 6, wobei die Haltearme (2) an dem unteren Ende einer Stange (29) angelenkt sind, die mit ihrem oberen Ende drehbar mit einem Arm (28) verbunden ist, der sich orthogonal von einer Torsionswelle (26) erstreckt, die parallel zu dem und drehbar an dem Schwingträger (6) angeordnet ist, und wobei ein unterschiedlicher Druck der Stoßdämpfer (4) die seitliche Steifheit des Chassis (8) erhöht.

8. Dreiradfahrzeug nach den vorhergehenden Ansprüchen, wobei die Betätigungsmittel zwei Kabel (18) aufweisen, die sich zwischen der Lenkstange (17) und den hydraulischen Mitteln (25, erstrecken.

## Revendications

1. Véhicule à trois roues comprenant :
- une roue individuelle orientable (30) montée sur un châssis (8);
- deux roues (1) substantiellement parallèles reliées au châssis (8) au moyen d'une suspension articulée ;
- des moyens de braquage (31) reliés au châssis (8) de manière pivotante pour une rotation autour d'un premier axe (B) et reliés à ladite roue orientable (30) ;
- un guidon (17) monté pour rotation avec lesdits moyens de braquage (31) autour dudit premier axe(B) ;
- un élément d'inclinaison (17) monté pour rotation autour d'un second axe (A) ;
- des moyens de commande (18) reliés audit élément d'inclinaison (17) et transmettant la rotation de celui-ci autour dudit second axe (A) à ladite suspension articulée qui est soumise à une inclinaison par rapport à un plan médian longitudinal vertical,
dans lequel ladite suspension articulée comprend :
- des bras de support (2) substantiellement longitudinaux desdites roues parallèles (1), ces bras de support (2) étant montés pour rotation autour d'un troisième axe, transversal, du châssis (8) ;
- une traverse basculante (6) reliée de manière pivotante audit châssis (8) autour d'un quatrième axe (7) du châssis ;
- des amortisseurs (4) articulés de manière pivotante au niveau de leurs extrémités (4a, 4b) avec lesdits bras de support (2) et ladite traverse basculante (6), respectivement ;
***caractérisé en ce que*** ledit élément d'inclinaison(17) est constitué par ledit guidon (17) qui est relié de manière pivotante auxdits moyens de braquage (31) autour dudit second axe (A) qui s'étend dans une direction substantiellement longitudinale du véhicule de manière substantiellement orthogonale audit premier axe (B),
et ***en ce que*** la suspension articulée comprend de plus :
- un dispositif stabilisateur (12) relié de manière pivotante à ladite traverse basculante (6) autour d'un cinquième axe (10) ;
- une patte de raccordement (13) solidaire dudit châssis (8) et à une extrémité de laquelle est réunie de manière pivotante ladite traverse basculante (6) et à l'autre extrémité de laquelle est réuni de manière pivotante ledit dispositif stabilisateur (12) ; et
- des moyens hydrauliques (25) actionnés par lesdits moyens de commande (18) et déplaçant ledit dispositif stabilisateur (12) en fonction de la position dudit guidon (17) par rapport audit second axe (A).

2. Véhicule à trois roues selon la Revendication 1, dans lequel ledit dispositif stabilisateur est un vérin à double effet (12) dans lequel coulisse un piston (14) muni d'une tige (11) reliée de manière pivotante à ladite traverse basculante (6) autour dudit cinquième axe (10).

3. Véhicule à trois roues selon les Revendications 1 ou 2, dans lequel ledit quatrième axe (7) du châssis est un axe longitudinal audit châssis.

4. Véhicule à trois roues selon les Revendications 2 ou 3, dans lequel sont prévus des moyens élastiques (15) contrecarrant coaxialement ledit piston (14) lorsqu'il coulisse dans ledit vérin (12). comprenant un ressort (15) interposé entre deux parois d'extrémité (15a, 15b) coulissant sur ladite tige (11), chacune dans seulement une direction, l'une vers l'autre, reposant sur deux épaulements (35a, 35b) ménagés sur ledit vérin (12).

5. Véhicule à trois roues selon les Revendications 2 à 4, dans lequel ledit ressort (15) est précontraint entre lesdites parois (15a, 15b).

6. Véhicule à trois roues selon les Revendications 2 à 5, dans lequel lesdits moyens hydrauliques comprennent un tiroir (25) muni d'une tige (16) actionnée par lesdits moyens de commande (18), ledit tiroir (25) contrôlant l'écoulement d'un fluide hydraulique sous pression à travers des conduits flexibles (20, 24) communiquant avec ledit vérin (12) à double effet.

7. Véhicule à trois roues selon les Revendications 3 à 6, dans lequel lesdits bras de support (2) sont articulés avec l'extrémité inférieure d'une tige (29) qui, à son extrémité supérieure, s'engage de manière pivotante avec un bras (28) s'étendant orthogonalement depuis une barre de torsion (26) parallèle et s'engageant de manière pivotante avec ladite traverse basculante (6), grâce à quoi une compression différente desdits amortisseurs (4) augmente la rigidité latérale dudit châssis (8).

8. Véhicule à trois roues selon les Revendications précédentes, dans lequel lesdits moyens de commande comprennent deux câbles (18) tendus entre ledit guidon (17) et lesdits moyens hydrauliques (25, 16).
